# EUROPEAN PATENT SPECIFICATION

(11) **EP 0 467 285 B1**
(45) Date of publication and mention of the grant of the patent: **22.03.1995**
(21) Application number: 91111834.7
(22) Date of filing: 16.07.1991
(51) Int. Cl.: G01N 35/10, G01N 35/04

(54) **Device for moving pipette trays in an analyzer**
Vorrichtung zum Bewegen eines Pipettenträgers in einem Analysator
Dispositif pour le déplacement d'un support pour pipettes dans un analyseur

(30) Priority: 20.07.1990 DE 4023182
(43) Date of publication of application: 22.01.1992
(73) Proprietor: Johnson & Johnson Clinical Diagnostics, Inc., Rochester New York 14650 (US); KODAK AKTIENGESELLSCHAFT, D-70323 Stuttgart (DE)
(72) Inventor: Hirsch, Alexander, c/o Kodak Aktiengesellschaft, W-7000 Stuttgart-Wangen 60 (DE)
(74) Representative: Mercer, Christopher Paul

(56) References cited:
- EP-A- 0 243 915
- EP-A- 0 282 076
- EP-A- 0 336 013
- EP-A- 0 356 250
- US-A- 4 478 094
- US-A- 4 861 554

## Description

The present invention relates to a device for translatorily moving a plate-shaped pipette tray equipped with pipettes arranged in the direction of tray movement to the processing station of an analyzer for alignment therein.

An analyzer is known from DE-A-19 21 302 in which trays equipped with cuvettes are moved along a feed path and past a processing station. The trays are provided with slots cooperating with a feed mechanism. Also a mechanical latching means engages with said slots in order to fix a cuvette exactly in the processing station. Due to its many mechanical components, this known analyzer is of a complex design and operates awkwardly.

It is the object of the present invention to provide a reliable operating device of simple design for moving and aligning a pipette tray in an analyzer. The object is attained in that
- the pipette tray frictionally rests on a driven continuous movement means,
- a stop member is stationarily arranged in the path of movement of the pipettes,
- in the area of the stop member a sensor means is provided which detects a pipette tray positioned in the processing station,
- a stepping motor can be controlled by a signal produced by the sensor means, and by means of said motor the position of a pipette in the processing station can be determined, and in that a pipette can be reciprocated between various containers, vessels or suchlike by means of an aspirator for transporting and delivering liquid.

The invention provides for a pipette tray resting on the continuous movement means driven by the stepping motor first to be moved towards the stop member and after reversal of the stepping motor returned to its processing position by one or more indexing steps in the opposite direction. In this way, each pipette is reliably and exactly aligned in its processing station.

Moreover, the sensor means is designed as an optoelectric sensor, and the pipette tray is provided with a supporting rim on both sides having apertures and partitions forming an encoding bar for the sensor means.

Further features and advantages will be apparent from an embodiment of the invention shown in the drawing as well as from the remaining sub-claims.
- Fig. 1: shows a schematic representation of the containers, vessels or suchlike and an aspirator used in the analyzer,
- Fig. 2A: is a cross-sectional side view of the device according to the invention
- Fig. 2B: shows a partial view of the device according to Fig. 2A with the pipette being arranged at an inclined position,
- Fig. 2C: shows a partial view of the device according to Fig. 2A with the pipette being arranged in vertical position,
- Fig. 3: shows a top view of the device according to Fig. 2A,
- Fig. 4: is the device according to Fig. 2A shown in the direction of the arrow A and partly in cross-section,

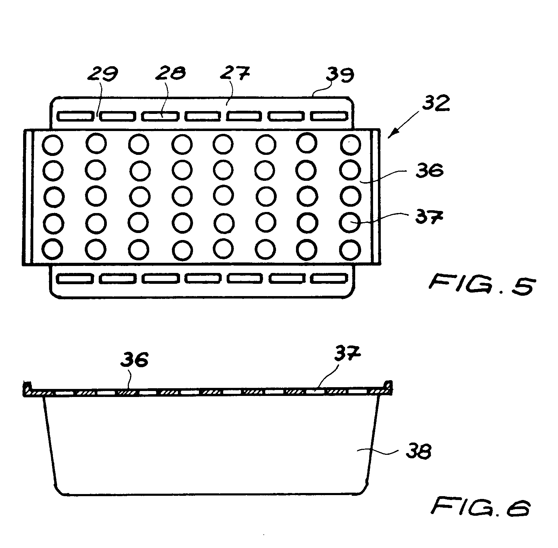

- Fig. 5: is a top view of a pipette tray used in the device, and
- Fig. 6: shows a cross-sectional side view of the pipette tray according to Fig. 5.

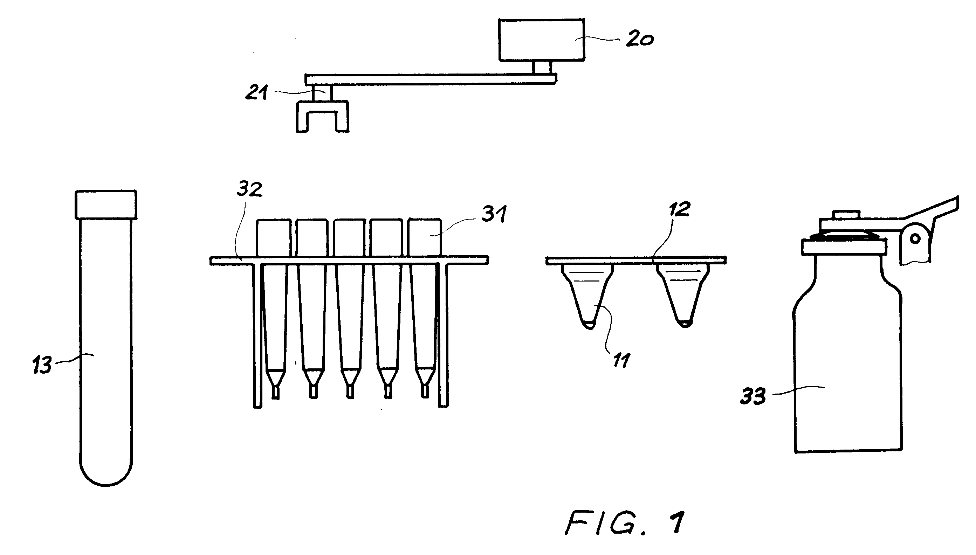

Fig. 1 shows a schematic representation of the containers and vessels used in an analyzer for determining the properties of body fluids, e.g. blood serum.

The liquid fed to the analyzer in a sample tube 13 for examination may be too viscous and thus not suitable for processing. For this case, a number of bottles 33 filled with various diluents are provided in the analyzer. The viscous body fluid in the sample tube 13 and the diluent in bottle 33 are mixed in cups 11 arranged in a cup holder 12. For this purpose, pipettes 31 are provided held for removal in a pipette tray 32. By means of a microprocessor controlled aspirator 20 including a proboscis 21, body fluid from the sample tube 13 and diluent from a bottle 33 can be brought to a cup 11 and mixed therein.

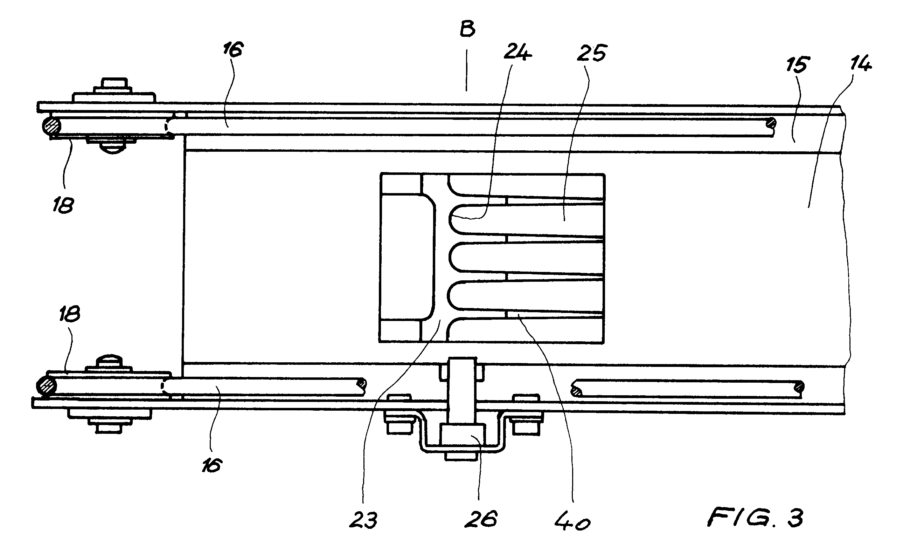

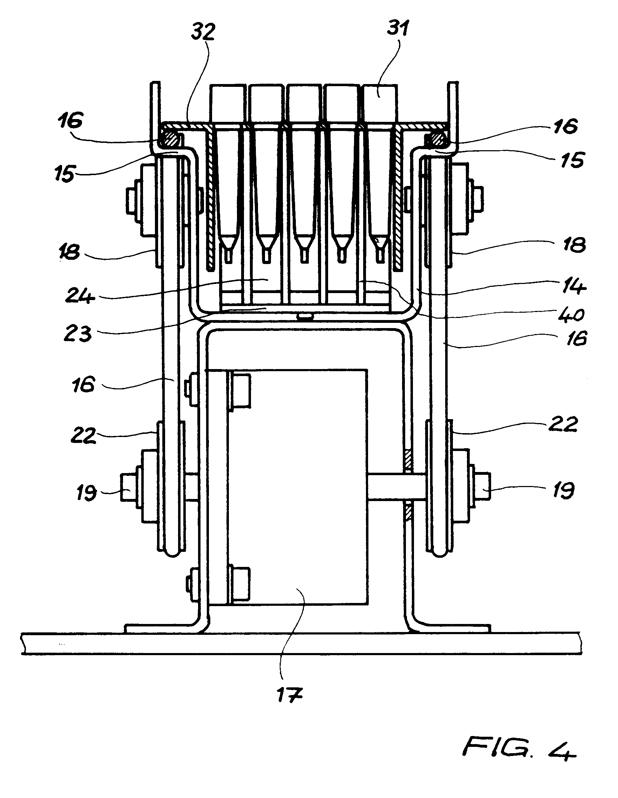

The subject of the invention is the movement and alignment of the pipette tray 32 in a processing station B (see Fig. 3). As illustrated in the drawing according to Fig. 4, the device according to the invention consists of an elongate guide trough 14 of U-shaped cross-section extending from an input station formed at the front face of the analyzer to the interior of the apparatus.

The vertical legs of guide trough 14 are both provided with an outwardly oriented shoulder 15 by means of which one portion of a continuous movement means 16 is slidingly supported. The continuous movement means 16 is driven by a microprocessor controlled steppipng motor 17 via pulleys 18. The stepping motor 17 is arranged in the housing such that the two continuous movement means 16 each running over a shoulder 15 are driven in synchronism. For this purpose, the stepping motor 17 is arranged beneath guide trough 14 and provided with a dual shaft 19 carrying drive pulleys 22.

Within guide trough 14 a stop member 23 is mounted having a number of stop surfaces 24 associated with the pipettes 31 and being arranged normal to the direction of movement of the continuous movement means 16 and thus to a pipette tray 32. The stop surfaces 24 are adapted to the shape of pipettes 31 and located at the end of feed channels 25 separated from one another by thin walls 40 and contribute to the exact alignment of the pipettes 31 in their processing station (see Fig. 3). Stop member 23 as well as pipette tray 32 consist of an electrically conductive plastic material in order to remove electrostatic charges via apparatus ground which may produce during transport due to friction occurring between the continuous movement means 16 and the pipette tray 32.

An optoelectric sensor means 26 is arranged to one side of guide trough 14 in the area of stop member 23 which means is used for exactly aligning the pipettes in processing station B by cooperating with encoding bars 27 formed at the longitudinal rims of a pipette tray 32 and consisting of apertures 28 and partitions 29 (see Fig. 4).

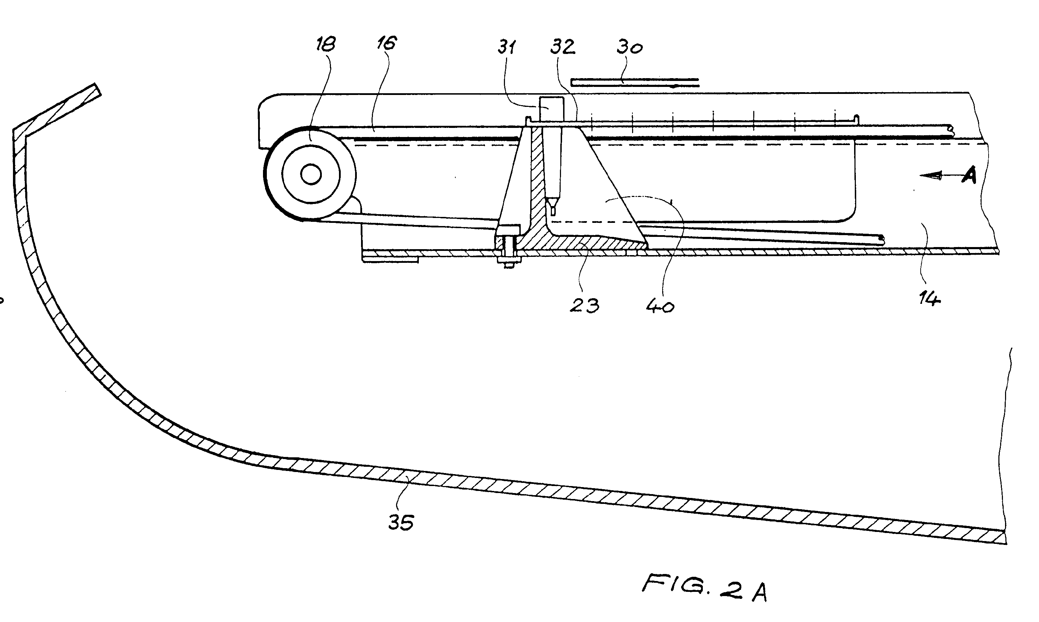

At the end of the guide trough 14 located within the apparatus a return chute 35 starts which is arranged below trough 14 and extends as far as the input station at the front side of the analyser (see Fig. 2A).

A pipette tray 32 consists of a flat plate 36 having receptacles 37 for pipettes 31. The receptacles are arranged in eight rows extending normal to the direction of tray movement. Each row comprises five holes so that a pipette tray 32 can hold 40 pipettes 31 (see Fig. 4).

On both sides, plate 36 is provided with a vertically extending longitudinal wall 38 the height of which is dimensioned such that the pipette tray 32 can be placed on a supporting surface without the pipette ends touching said surface. Plate 36 also features a supporting rim 39 on both sides parallel to the longitudinal wall 38 which supporting rim also comprises the encoding bar 27.

The device operates as follows:

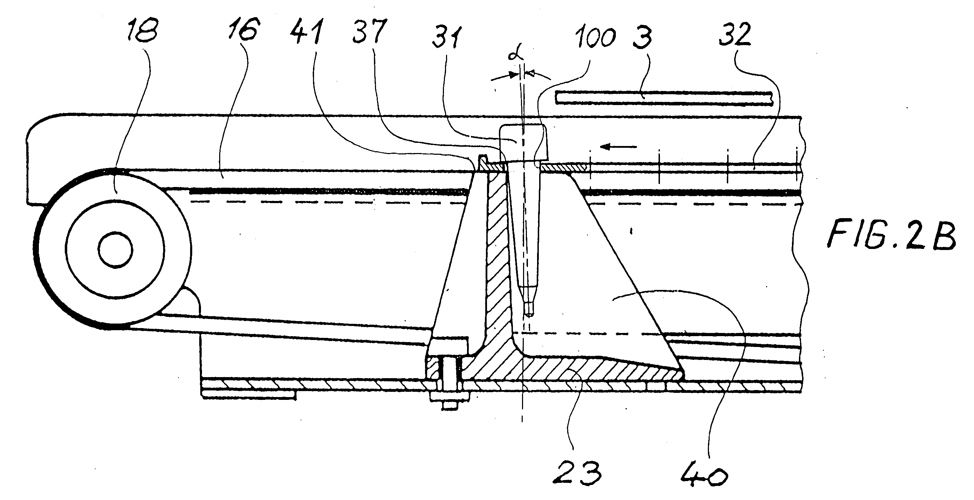

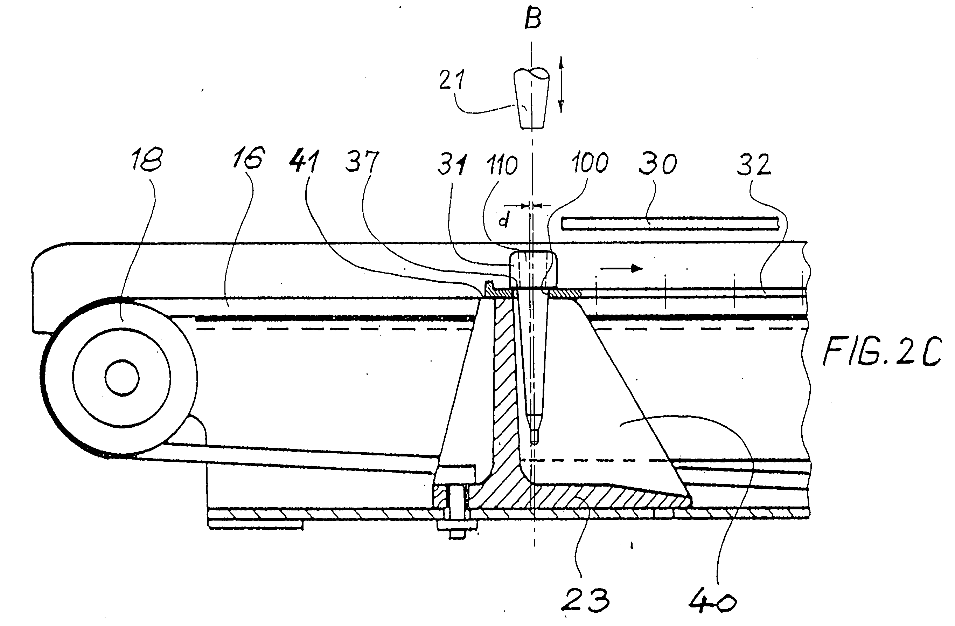

In the input station, the pipette trays 32 equipped with pipettes 31 are placed on the continuous movement means 16 designed as belts of circular cross-section and, due to the frictional engagement between their supporting rims 39 and the belts, are driven until the first row of pipettes 31 abuts stop member 23 whereby the pipettes are tilted by an angular amount 'a' due to their being engaged by the rear edges 100 of receptacles 37 (see Fig. 2B). At the same time, the sensor means 26 detects the first aperture 28 of encoding bar 27, determines the presence of a pipette and delivers a signal which is fed to a microprocessor and effects reversal of the direction of rotation of stepping motor 17 by three steps, for example. As a result, the pipettes are withdrawn by an amount 'd' from stop member 23, resume their vertical position and are thus exactly aligned in the processing station B under the action of the rear edges 100 of receptacles 37 (see Fig. 2C).

Then the aspirator 20 engages a pipette 31 and pulls it out of the pipette tray 32 in that the tapered proboscis 21 is pressed into an aperture 110 of the pipette which aperture is also tapered. The top portion of pipette 31 thereby rests via plate 36 of pipette tray 32 on support surface 41. Using this first pipette 31, body fluid is removed from sample tube 13 positioned in its processing station and delivered into a cup 11 which is also positioned in its processing station. The first used pipette 31 is then thrown into a waste bin and the aspirator 20 removes a second pipette 31 from tray 32 in order to suck diluent from a bottle 33 by means of proboscis 21 and deliver it also to cup 11 filled with body fluid. Repeated aspiration and ejection by the proboscis 21 evenly mixes the fluids to the consistencies desired. As soon as diluted body fluid has been delivered to a dispenser which in turn delivers a predetermined quantity to a slide, the second pipette is also discarded. If there are still non-used pipettes in a row of pipette tray 32 which, however, are not required immediately, this is signalled to the microprocessor and tray 32 is moved back a predetermined amount of steps by stepping motor 17 so that the non-used clean pipettes 31 are protected by a cover 30. This avoids fouling of the pipettes 31.

When all pipettes 31 have been removed from a pipette tray 32, the tray is advanced further by the continuous movement means 16 until it drops into the return chute 35, slides back automatically to the input station at the front side of the analyzer, is removed and again equipped with pipettes.

## Claims

1. Device for translatorily moving a plate-shaped pipette tray (32) equipped with pipettes (31) arranged in the direction of tray movement to the processing station (B) of an analyzer for alignment therein, **characterized** in that
- the pipette tray (32) frictionally rests on a driven continuous movement means (16),
- a stop member (23) is stationarily arranged in the path of movement of the pipettes (31),
- in the area of the stop member (23) a sensor means (26) is provided which detects a pipette tray (32) positioned in the processing station (B)
- a stepping motor (17) can be controlled by a signal produced by the sensor means (26), and by means of said motor the position of a pipette (31) in the processing station (B) can be determined, and in that
- a pipette (31) can be reciprocated between various containers, vessels or suchlike by means of an aspirator (20) for transporting and delivering liquid.

2. Device according to claim 1, characterized in that a pipette tray (32) resting on the continuous movement means (16) driven by the stepping motor (17) is first moved towards the stop member (23) and after reversal of the stepping motor (17) returned to its processing position by one or more incremental steps in the opposite direction.

3. Device according to claims 1 and 2, characterized in that an elongate guide trough (14) of U-shaped cross-section is provided whose vertical legs each have an outwardly oriented shoulder (15) on which the continuous movement means (16) carrying one or more pipette trays (32) slidingly rests.

4. Device according to claims 1 thru 3, characterized in that the stop member (23) is arranged within the guide trough (14) and has one or more stop surfaces (24) associated with the pipettes (31).

5. Device according to claim 4, characterized in that the stop surfaces (24) are adapted to the shape of the pipettes (31) and positioned at the end of a feed channel (25).

6. Device according to claims 1, 4 and 5, characterized in that the feed channels (25) for each of the pipettes (31) arranged in a row normal to the direction of movement of the pipette tray (32) are defined by a thin vertically extending wall (40) between two adjacent feed channels.

7. Device according to claims 1 thru 3, characterized in that in the area of the end position of the guide trough (14) within the apparatus a return chute (35) for the pipette trays (32) starts which extends substantially below the guide trough (14) and leaves the apparatus at an input station provided at the front face of the analyzer.

8. Device according to claim 1, characterized in that the sensor means (26) arranged in the area of the stop member (23) is designed as an optoelectric sensor.

9. Device according to claims 1, 2, 3 and 8, characterized in that the sensor means (26) is arranged at the guide trough (14), and in that in the area of each supporting rim (39) of a pipette tray (32) apertures (28) and partitions (29) associated with the sensor means are formed which define an encoding bar (27).

10. Device according to any of claims 1 thru 9, characterized in that the pipette tray (32) consists of an electrically conductive material.

11. Device according to any of claims 1 thru 9, characterized in that outside the area of the inserted pipettes (31) the pipette tray (32) is provided with one longitudinal wall (38) each on both sides extending in the direction of movement and having a height which is dimensioned such that it extends beyond the lower ends of the pipettes (31) inserted in receptacles (37).

12. Device according to any of claims 1 thru 9, characterized in that stop member (23) consists of an electrically conductive plastic material and is connected to ground potential via the apparatus.

13. Device according to claims 1 and 2, characterized in that with its laterally formed supporting rims (39) a pipette tray (32) rests on two continuous movement means (16) which are both synchronously driven by a dual-shaft type stepping motor (17).

14. Device according to claims 4 thru 6, characterized in that stop member (23) is provided with a support surface (41) for plate (36) of pipette tray (32).

## Patentansprüche

1. Vorrichtung zum translatorischen Bewegen und Ausrichten eines plattenförmigen Pipettenhalters (32) der mit in Bewegungsrichtung angeordneten Pipetten (31) bestückt ist, zu bzw. in einer Bearbeitungsstation (B) innerhalb eines Analysegeräts, dadurch gekennzeichnet, daß
- der Pipettenhalter (32) auf einem angetriebenen Endlosbewegungsmittel (16) reibschlüssig aufliegt,
- im Bewegungsweg der Pipetten (31) ein Anschlag (23) gehäusefest angeordnet ist,
- im Bereich des Anschlags (23) eine Sensoreinrichtung (26) vorgesehen ist, die einen in der Bearbeitungsstation (B) befindlichen Pipettenhalter (32) feststellt,
- durch ein von der Sensoreinrichtung (26) erzeugtes Signal ein Schrittschaltmotor (17) steuerbar und mittels desselben die Lage einer Pipette (31) in ihrer Bearbeitungsstellung (B) bestimmbar ist und daß
- eine Pipette (31) mittels einer Entnahmevorrichtung (20) zum Transport und zur Abgabe von Flüssigkeit zwischen verschiedenen Behältern, Gefäßen oder dergl. hin- und herbewegbar ist.

2. Vorrichtung nach Anspruch 1, dadurch gekennzeichnet, daß ein auf dem vom Schrittschaltmotor (17) angetriebenen Endlosbewegungsmittel (16) aufliegender Pipettenhalter (32) zunächst gegen den Anschlag (23) bewegbar und nach Drehrichtungsumkehr des Schrittschaltmotors (17) um einen oder mehrere Schaltschritte in die entgegengesetzte Richtung in seine Bearbeitungstellung zurückbewegbar ist.

3. Vorrichtung nach den Ansprüchen 1 und 2, dadurch gekennzeichnet, daß eine sich längserstreckende im Querschnitt U-förmige Führungswanne (14) vorgesehen ist, deren vertikale Schenkel jeweils eine nach außen gerichtete Schulter (15) aufweisen, auf denen sich das ein oder mehrere Pipettenhalter (32) tragende Endlosbewegungsmittel (16) gleitend abstützt.

4. Vorrichtung nach den Ansprüchen 1 bis 3, dadurch gekennzeichnet, daß der Anschlag (23) innerhalb der Führungswanne (14) angeordnet ist und eine oder mehrere den Pipetten (31) zugeordnete Anschlagflächen (24) aufweist.

5. Vorrichtung nach Anspruch 5, dadurch gekennzeichnet, daß die Anschlagflächen (24) der Außenform der Pipetten (31) angepaßt sind und am Ende eines Einlaufkanals (25) liegen.

6. Vorrichtung nach den Ansprüchen 1, 4 und 5, dadurch gekennzeichnet, daß die Einlaufkanäle (25) für jede der in einer Reihe quer zur Bewegungsrichtung des Pipettenhalters (32) angeordneten Pipetten (31) durch eine dünne vertikale Wand (40) zwischen zwei benachbarten Einlaufkanälen (25) gebildet sind.

7. Vorrichtung nach den Ansprüchen 1 bis 3, dadurch gekennzeichnet, daß im Bereich des geräteinneren Endes der Führungswanne (14) eine Rücklaufrutsche (35) für die Pipettenhalter (32) beginnt, die im wesentlichen unterhalb der Führungswanne (14) verläuft und an einer an der Frontseite des Analysegeräts vorgesehenen Eingabestelle ins Freie mündet.

8. Vorrichtung nach Anspruch 1, dadurch gekennzeichnet, daß die im Bereich des Anschlags (23) angeordnete Sensoreinrichtung (26) als opto-elektronischer Sensor ausgebildet ist.

9. Vorrichtung nach den Ansprüchen 1, 2 ,3 und 8, dadurch gekennzeichnet, daß die Sensoreinrichtung (26) an der Führungswanne (14) angeordnet ist und daß im Bereich jedes Auflagerandes (39) eines Pipettenhalters (32) der Sensoreinrichtung zugeordnete Durchbrüche (28) bzw. Stege (29) ausgebildet sind, die eine Codierleiste (27) bilden.

10. Vorrichtung nach einem der Ansprüche 1 bis 9, dadurch gekennzeichnet, daß der Pipettenhalter (32) aus einem elektronisch leitenden Kunststoff besteht.

11. Vorrichtung nach einem der Ansprüche 1 bis 9, dadurch gekennzeichnet, daß der Pipettenhalter (32) außerhalb des Bereichs der eingesteckten Pipetten (31) beidseitig je eine sich in Bewegungsrichtung erstreckende Längswand (38) aufweist, deren Höhe so bemessen ist, daß sie die unteren Enden der in Aufnahmelöcher (37) eingesteckten Pipetten (31) überträgt.

12. Vorrichtung nach einem der Ansprüche 1 bis 9, dadurch gekennzeichnet, daß der Anschlag (23) aus einem elektrisch leitenden Kunststoff besteht und am Gerät geerdet ist.

13. Vorrichtung nach den Ansprüchen 1 und 2, dadurch gekennzeichnet daß ein Pipettenhalter (32) mit seinen seitlich ausgebildeten Auflagerändern (39) auf jeweils ein Endlosbewegungsmittel (16) aufliegt und beide Endlosbewegungsmittel von einem doppelachsigen Schrittschaltmotor (17) synchron antreibbar sind.

14. Vorrichtung nach den Ansprüche 4 bis 6, dadurch gekennzeichnet, daß der Anschlag (23) eine Auflagefläche (41) für die Platte (36) des Pipettenhalters (36) aufweist.

## Revendications

1. Dispositif destiné à déplacer par translation un plateau (32) à pipettes ayant la forme d'une plaque, comportant des pipettes (31) agencées dans la direction de déplacement du plateau, vers le poste de traitement (B) d'un analyseur, pour alignement à l'intérieur de celui-ci
caractérisé en ce que
- le plateau (32) à pipettes est en appui avec friction sur des moyens (16) entraînés selon un mouvement continu,
- un élément d'arrêt (23) est agencé de manière fixe dans le trajet de déplacement des pipettes (31),
- dans la zone de l'élément d'arrêt (23), des moyens (26) de détection sont agencés, lesquels détectent un plateau (32) à pipettes positionné dans le poste de traitement (B),
- un moteur (17) pas-à-pas peut être commandé par un signal produit par les moyens (26) de détection, et par l'intermédiaire dudit moteur la position d'une pipette (31) dans le poste de traitement (B) peut être déterminée, et
- une pipette (31) peut être déplacée en va-et-vient entre divers réservoirs, récipients ou analogues par l'intermédiaire d'un dispositif aspirateur (20) destiné à transporter et à délivrer un liquide.

2. Dispositif selon la revendication 1, caractérisé en ce qu'un plateau (32) à pipettes positionné en appui sur les moyens (16) de déplacement continu entraînés par le moteur (17) pas-à-pas, est d'abord déplacé en direction de l'élément d'arrêt (23) et ensuite, après inversion du moteur (17) pas-à-pas, est renvoyé vers sa position de traitement via un ou plusieurs pas dans le sens opposé.

3. Dispositif selon les revendications 1 et 2, caractérisé en ce qu'une glissière de guidage (14) allongée ayant une section transversale en forme de U est agencée, des pattes verticales de celle-ci comportant chacune un épaulement (15) orienté vers l'extérieur, sur lesquels sont en appui avec contact glissant les moyens (16) de déplacement continu supportant un ou plusieurs plateaux (32) à pipettes.

4. Dispositif selon les revendications 1 à 3, caractérisé en ce que l'élément d'arrêt (23) est agencé à l'intérieur de la glissière de guidage (14) et comporte une ou plusieurs surfaces d'arrêt (24) associées aux pipettes (31).

5. Dispositif selon la revendication 4, caractérisé en ce que les surfaces d'arrêt (24) sont adaptées à la forme des pipettes (31) et sont positionnées à l'extrémité d'un canal d'alimentation (25).

6. Dispositif selon les revendications 1, 4 et 5, caractérisé en ce que les canaux d'alimentation (25) destinés à chacune des pipettes (31) agencées en rangées perpendiculairement à la direction de déplacement des plateaux (32) à pipettes sont définis par une paroi mince (40) s'étendant verticalement située entre deux canaux d'alimentation adjacents.

7. Dispositif selon les revendications 1 à 3, caractérisé en ce que dans la zone de la position d'extrémité de la glissière de guidage (14), à l'intérieur de l'appareil, commence une goulotte de retour (35) destinée aux plateaux (32) à pipettes, laquelle s'étend essentiellement au-dessous de la glissière de guidage (14) et sort de l'appareil au niveau du poste d'entrée agencé au niveau de la face avant de l'analyseur.

8. Dispositif selon la revendication 1, caractérisé en ce que les moyens de détection (26) agencés dans la zone de l'élément d'arrêt (23) sont conçus en tant que détecteur optoélectrique.

9. Dispositif selon les revendications 1, 2, 3 et 8, caractérisé en ce que les moyens de détection (26) sont agencés au niveau de la glissière de guidage (14), et en ce que dans la zone de chaque rebord de support (39) d'un plateau (32) à pipettes, sont formées des ouvertures (28) et des séparations (29) associées aux moyens de détection, lesquelles définissent une barre de codage (27).

10. Dispositif selon l'une quelconque des revendications 1 à 9, caractérisé en ce que le plateau (32) à pipettes est constitué d'un matériau électriquement conducteur.

11. Dispositif selon l'une quelconque des revendications 1 à 9, caractérisé en ce qu'en-dehors de la zone des pipettes (31) insérées, le plateau (32) à pipettes comporte une paroi longitudinale (38) sur chacun de ses deux côtés, s'étendant dans la direction de déplacement et ayant une hauteur qui est dimensionnée de telle sorte que celle-ci s'étende au-dessous des extrémités inférieures des pipettes (31) insérées dans des réceptacles (37).

12. Dispositif selon l'une quelconque des revendications 1 à 9, caractérisé en ce que l'élément d'arrêt (23) est constitué de matière plastique électriquement conductrice et est mis à la la terre via l'appareil.

13. Dispositif selon les revendications 1 et 2, caractérisé en ce qu'un plateau (32) à pipettes est en appui sur deux moyens (16) de déplacement continu qui sont tous deux entraînés de manière synchronisée par un moteur pas-à-pas (17) du type à arbre double, par l'intermédiaire de ses rebords de support (39) formés latéralement.

14. Dispositif selon les revendications 4 à 6, caractérisé en ce que l'élément d'arrêt (23) comporte une surface de support (41) pour la plaque (36) du plateau (32) à pipettes.
